# EUROPÄISCHE PATENTSCHRIFT

(11) **EP 0 716 292 B1**
(45) Veröffentlichungstag und Bekanntmachung des Hinweises auf die Patenterteilung: **16.08.2001**
(21) Anmeldenummer: 95119081.8
(22) Anmeldetag: 02.12.1995
(51) Int. Cl.: G01B 11/02, G01D 5/34

(54) **Verfahren und Vorrichtung zur Durchführung dieses Verfahrens zum Messen einer Lage von Bahnen oder Bogen**
Procedure and device to determine the position of a band or a webbing
Procédé pour déterminer la position de bandes ou de feuilles et dispositif à cet effet

(30) Priorität: 10.12.1994 DE 4444079
(43) Veröffentlichungstag der Anmeldung: 12.06.1996
(73) Patentinhaber: Koenig & Bauer Aktiengesellschaft, 97080 Würzburg (DE)
(72) Erfinder: Schaede, Johannes Georg, 97074 Würzburg (DE); Schwitzky, Volkmar Rolf, 97076 Würzburg (DE)

(56) Entgegenhaltungen:
- EP-A- 0 314 521
- DE-A- 2 231 776
- DE-A- 2 448 611
- US-A- 3 495 089
- PATENT ABSTRACTS OF JAPAN vol. 007, no. 150 (P-207), 30.Juni 1983 & JP-A-58 062504 (OPUTO KIGIYOU:KK)
- SIEMENS-ZEITSCHRIFT, Bd. 46, Nr. 5, 1972, DE, Seiten 349-352, XP002019927 H. SCHNEIDER: "Seitenkantenregelung laufender Warenbahnen"

## Beschreibung

Die Erfindung betrifft ein Verfahren und eine Vorrichtung zum Messen einer Lage einer Kante von einer Bahn oder Bogen gemäß dem Oberbegriff der Ansprüche 1 und 2.

Aus der DE-OS 22 02 087 ist eine Meßeinrichtung zur lichtelektrischen Messung einer Lage von Bogenkanten bezüglich einer Bezugslinie bekannt. Von einer Beleuchtungseinrichtung ausgehendes Licht wird von einem lichtelektrischen Empfänger aufgefangen. Entsprechend der Lage der zwischen Beleuchtungseinrichtung und Empfänger eingebrachten Bogenkante wird ein Videosignal erzeugt.
Das lichtelektrische Empfangsteil besteht aus einer Vielzahl von in geringem Abstand hintereinander angeordneten einzelnen Photoelementen.

Nachteilig ist hierbei, daß schon kleinste Beschädigungen oder Fasern an der zu messenden Bogenkante zu Fehlmessungen führen, da sich diese Fehler unmittelbar auf das Meßergebnis auswirken.

Die JP-OS 60-80703 offenbart eine Vorrichtung zur Messung einer Breite eines Bandes bzw. einer Schlängelung eines laufenden Bandkörpers. Diese Vorrichtung dient zur Messung einer Größe eines Fehlers. Hierbei wird keine punktförmige Lichtquelle verwendet.

Die JP-OS 58-62504 beschreibt eine Vorrichtung zum Messen einer Lage eines Objektes, wobei ein Bild des Objektes in einer Richtung vergrößert wird.

Die US 34 95 089 A zeigt eine Vorrichtung zur Regelung einer Lage einer Bahnkante. Dazu ist ein Sensor mit einer Leuchtdiode, einer sphärischen Linse und einer Photozelle angeordnet.

Die Siemens-Zeitschrift 46 (1972), Heft 5, Seiten 349 bis 352 beschreibt einen Seitenkantentaster für laufende Warenbahnen. Dieser Seitenkantentaster besteht aus einer Halogenglühlampe, einer Zylinderlinse und drei Fotodioden. Dabei wirft die Halogenglühlampe einen durch die Zylinderlinse gebündelten "Hellbalken" auf die teilweise von der Warenbahn abgedeckten Fotodioden. Nachteilig ist hierbei ein hoher Anteil an "Streulicht", so daß eine sichere Auswertung der erzeugten Signale nicht gewährleistet wird.

Der Erfindung liegt die Aufgabe zugrunde, ein Verfahren und eine Vorrichtung zum Messen einer Lage einer Kante von einer Bahn oder Bogen mittels eines mit einer Vielzahl von Photoelementen versehenen photoelektrischen Empfängers zu schaffen, bei dem bzw. bei der trotz kleiner Beschädigungen oder über eine senkrechte Projektion der Kante herausragender Fasern, sogenannter Anomalien, im Meßbereich der zu messenden Kante von Bahnen oder Bogen der photoelektrische Empfänger die Lage der Kante bezüglich dieses Empfängers exakt erkennt.

Diese Aufgabe wird erfindungsgemäß durch ein Verfahren und durch eine Vorrichtung zum Messen der Lage einer Kante von einer Bahn oder Bogen mit den Merkmalen der Ansprüche 1 und 2 gelöst.

In vorteilhafter Weise werden durch das erfindungsgemäße Verfahren Anomalien einer Kante von Bahnen oder Bogen so dargestellt, daß ein photoelektrischer Empfänger diese nicht als Kante erkennt und somit Fehlmessungen vermieden werden. Anomalien der Kante können insbesondere bei Papierbögen oder Papierbahnen in Form von beispielsweise Papierfasern, unsauberen Schnittkanten oder Rissen auftreten.
Auch wenn die Breite der Anomalien größer ist als die Breite des photoelektrischen Empfängers, werden diese Anomalien so auf dem photoelektrischen Empfänger dargestellt, daß ein Intensitätsunterschied zur zu messenden Kante vorhanden ist. Trotz dieses Intensitätsunterschiedes kann eine Auswerteelektronik die exakte Lage der Kante der Bahn oder des Bogens bestimmen.
Außerdem ist besonders vorteilhaft, daß aufgrund des erfindungsgemäßen Verfahrens nicht nur ein Bereich der Kante, der der Breite des photoelektrischen Empfängers entspricht, ausgewertet werden kann, sondern ein wesentlich größerer Bereich der Kante (Faktor 50 - 1000). Hiermit wird die Meßsicherheit wesentlich erhöht. Die verwendeten Hilfsmittel sind preiswerte Standardteile.

Das erfindungsgemäße Verfahren und die entsprechende Vorrichtung sind in der Zeichnung dargestellt und werden im folgenden näher beschrieben.

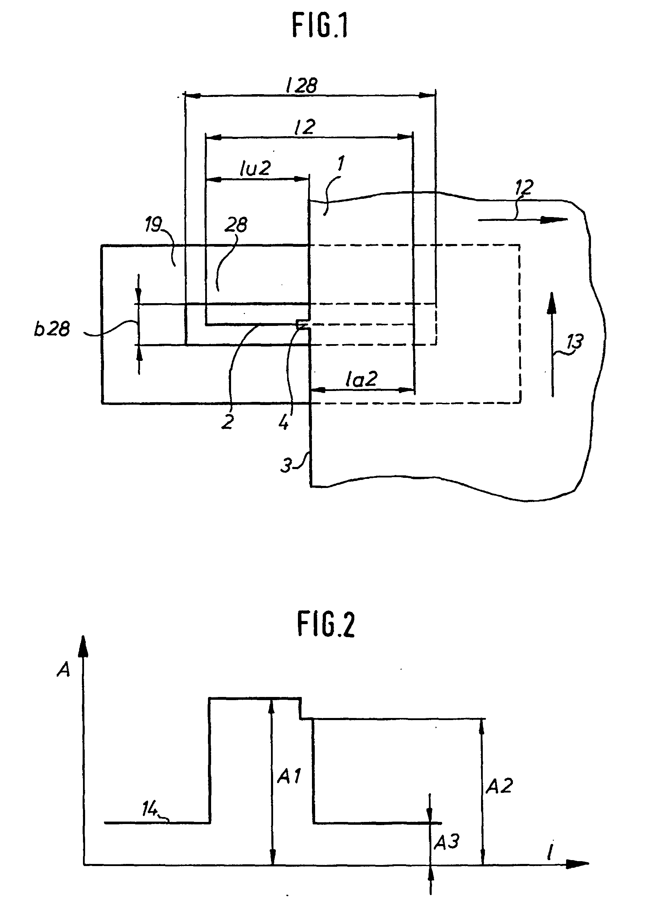

Es zeigen
- Fig. 1: eine schematische Draufsicht einer erfindungsgemäßen Vorrichtung mit Bahn und photoelektrischem Empfänger;
- Fig. 2: einen schematischen Verlauf eines der Lage der Bahn entsprechenden Videosignals;

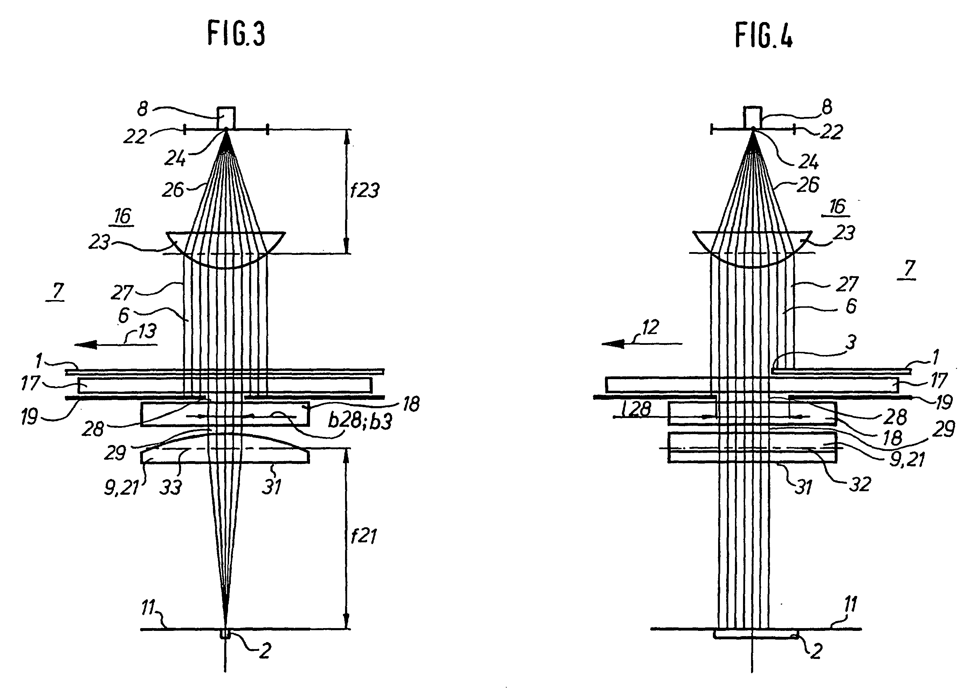

- Fig. 3: eine schematische Seitenansicht entlang der Richtung einer Längsachse der erfindungsgemäßen Vorrichtung;
- Fig. 4: eine schematische Seitenansicht entlang der Richtung einer Querachse der erfindungsgemäßen Vorrichtung.

Eine zu messende Bahn 1 oder Bogen wird zumindest im Meßbereich zur Bestimmung seiner Lage bezüglich eines photoelektrischen Empfängers 2 von einer in Form einer Geraden verlaufenden Kante 3 begrenzt. Diese Bahn 1 oder dieser Bogen ist im wesentlichen lichtabsorbierend. Bei dieser Bahn 1 oder diesem Bogen handelt es sich vorzugsweise um Papierbahnen bzw. Papierbogen, insbesondere in Rotationsdruckmaschinen, aber auch um anderes bahn- oder tafelförmiges Gut, wie Blech oder Folien. Im folgenden wird dieser beschriebene Bahn 1 oder Bogen vereinfachend Bahn 1 genannt. Die zu messende Kante 3 der Bahn 1 kann Anomalien 4 in Form von z. B. kleinen Beschädigungen, über die Kante 3 hervorstehende Fasern oder Einrisse aufweisen.

Die Bahn 1, die von der Anomalien 4 aufweisenden Kante 3 begrenzt wird, wird in ein Lichtstrahlenbündel 6 eines optischen Systemes 7 eingebracht. Dieses Lichtstrahlenbündel 6 geht von einer Lichtquelle 8 aus und trifft auf den photoelektrischen Empfänger 2. Mittels eines optischen Bauelementes 9 oder eines Systemes von optischen Bauelementen wird die Kante 3 bzw. ein Schatten der Bahn 1 in einer Abbildungsebene 11 auf dem photoelektrischen Empfänger 2 derart abgebildet, daß die Abbildung in einer senkrecht zur Kante 3 der Bahn 1 verlaufenden Querachse 12 in einem Querabbildungsmaßstab und in einer parallel zur Kante 3 der Bahn 1 verlaufenden Längsachse 13 in einem Längsabbildungsmaßstab erfolgt.
Der Querabbildungsmaßstab ist ungleich dem Längsabbildungsmaßstab des optischen Systemes 7. In besonders vorteilhafter Weise kann der Querabbildungsmaßstab eins zu eins betragen, weil dadurch eine Umrechnung von Meßwerten entsprechend dem Querabbildungsmaßstab entfällt. Die Kante 3 der Bahn 1 wird über eine wählbare Meßbreite b3, z. B. 10 mm, die mittels einer Blende begrenzt werden kann, ausgewertet. Mittels der Optik wird diese Meßbreite b3 der Kante 3 der Bahn 1 entsprechend dem Längsabbildungsmaßstab in der Abbildungsebene 11 abgebildet, d. h. die Kante 3 wird verkleinert abgebildet.

Als mit einer Vielzahl von Photoelementen versehener photoelektrischer Empfänger 2 kann beispielsweise ein an sich bekannter CCD-Zeilensensor 2 (charged coupled device) eingesetzt werden. Dieser CCD-Zeilensensor 2 kann aus z. B. 1728 in einer Zeile angeordneten Meßelementen bestehen. Diese Meßelemente sind z. B. 10 µm x 13µm groß und ein Mittenabstand zwischen zwei Meßelementen beträgt 10 µm, d. h. auf einen Millimeter kommen 100 Meßelemente. Hiermit ergibt sich eine Meßlänge 12 von 17,28 mm des beschriebenen CCD-Zeilensensors 2. Der nutzbare Arbeitsbereich kann natürlich auch kleiner als die Meßlänge 12 sein, im vorliegenden Beispiel entspricht der Arbeitsbereich der Meßlänge 12.

Der CCD-Zeilensensor 2 liefert mittels einer Auswerteelektronik ein analoges Videosignal 14, welches einen Amplitudenverlauf entsprechend der Lage der Kante 3 der Bahn 1 aufweist. So kann z. B. eine Amplitude A3 des durch die Bahn 1 abgedeckten Bereiches mit einer Länge la2 des CCD-Zeilensensors 2 minimal sein, während der unbedeckte Bereich mit einer Länge lu2 des CCD-Zeilensensors 2 eine der Intensität einer Beleuchtungseinrichtung 16 entsprechende Amplitude A1 liefern kann.

Weist nun die Kante 3 der Bahn 1 im Bereich der Meßbreite b3 eine oder mehrere Anomalien 4 auf, werden auch diese Anomalien 4 entsprechend dem Längsabbildungsmaßstab in der Abbildungsebene 11, d. h. auf dem CCD-Zeilensensor 2 abgebildet. Dies hat zur Folge, daß im Bereich der Anomalien 4 ein Strahlengang des Lichtstrahlenbündels 6 verändert wird und je nach Größe der Anomalie 4 in Längsrichtung sich eine entsprechende, auf dem CCD-Zeilensensor 2 wirkende Intensität der Beleuchtungseinrichtung 16 einstellt. Somit ergibt sich eine der Breite der Anomalie 4 entsprechende Amplitude A2 des Videosignals 14. Die Größe dieser Amplitude A2 liegt zwischen der Amplitude A3 im abgedeckten Zustand des CCD-Zeilensensors 2 und der Amplitude A1 im völlig unbedeckten Zustand des CCD-Zeilensensors 2, solange die Anomalie 4 nicht die gesamte Meßbreite b3 einnimmt. Aus diesem abgestuften Videosignal 14 kann nun mittels geeigneter, bekannter Elektronik die Lage der Kante 3 der Bahn 1 bestimmt werden.

Eine Vorrichtung zur Durchführung des beschriebenen, erfindungsgemäßen Verfahrens besteht, beispielsweise im wesentlichen aus einer Beleuchtungseinrichtung 16, einem Objektträger 17, einem IR - Filter 18, einer Blende 19, einer abbildenden Linse 21 und einem photoelektrischen Empfänger, z. B. CCD-Zeilensensor 2. Diese Elemente sind entlang einer optischen Achse angeordnet.
Die Beleuchtungseinrichtung 16 besteht im wesentlichen aus einer Lichtquelle 8, beispielsweise einer Infrarot (IR) - Lichtquelle 8, einer Blende 22 und einem Kondensor 23.
Direkt nach der IR - Lichtquelle 8, die Licht mit einer Wellenlänge von z. B. 750 nm ausstrahlt, ist die Blende 22 mit einer sehr kleinen Blendenöffnung 24 (z. B. Bohrung mit ca. 0,05 mm bis 1 mm Durchmesser) angeordnet. Hiermit wird eine annähernd punktförmige IR - Lichtquelle erzeugt. In einem Abstand f23, der einer Brennweite f23 des Kondensors 23 entspricht, befindet sich der Kondensor 23, d. h. die IR - Lichtquelle 8 steht im vorderen Brennpunkt des Kondensors 23. Als Kondensor 23 dient im dargestellten Beispiel eine asphärische Linse, wobei der Kondensor 23 aber auch aus mehreren Linsen z. B. einer Kombination aus einer Konkavkonvexlinse und einer oder mehreren asphärischen Linsen bestehen kann. Der Kondensor 23 parallelisiert im vorliegenden Beispiel die von der punktförmigen IR - Lichtquelle 8 ausgehenden Lichtstrahlen 26 zu einem zylinderförmigen Lichtstrahlenbündel 27 mit parallelen Strahlen.
Als Beleuchtungseinrichtungen 16 können auch andere gerichtete Lichtstrahlen aussendende Lichtquellen verwendet werden, z. B. ein Laservorhang, um ein gerichtetes Lichtstrahlenbündel 27 zu erhalten.

Als Objektträger 17 ist senkrecht zu dem Lichtstrahlenbündel 27 eine planparallele Glasplatte 17 angebracht. Das parallele Lichtstrahlenbündel 27 durchdringt die Glasplatte 17 senkrecht und trifft auf eine direkt nach der Glasplatte 17 angeordnete Blende 19. Diese Blende 19 begrenzt das Lichtstrahlenbündel 27 auf eine Größe einer Blendenöffnung 28 der Breite b28, z. B. 5 mm und Länge 128, z. B. 20 mm. Die Blende 19 ist annähernd mittig und senkrecht zum Lichtstrahlenbündel 27 angeordnet. Somit werden Abbildungsfehler, die in Randbereichen des Kondensors 23 entstehen und sich in nicht parallelen Strahlen äußern weitgehend eliminiert. Die sich senkrecht zur zu messenden Kante 3 erstreckende Länge 128 der Blendenöffnung 28 der Blende 19 ist beispielsweise etwas länger als die Meßlänge 12 des CCD-Zeilensensors 2. Die parallel zur zu messenden Kante 3 verlaufende Breite b28 der Blendenöffnung 28 der Blende 19 bestimmt die bei der Messung einbezogene Breite b3 der Kante 3, z. B. 2 mm bis 8 mm.
An die Blende 19 schließt sich ein IR - Filter 18 an, der die Aufgabe hat, Tageslichteinflüsse zu eliminieren. In die nach der Blende 19 und dem IR - Filter 18 angeordnete, abbildende Linse 21 dringt ein rechteckiges, paralleles Lichtstrahlenbündel 29 der Breite b28 und Länge 128. Diese abbildende Linse 21 weist entlang der Querachse 12 einen Querabbildungsmaßstab und in der zur Querachse 12 senkrecht liegenden Längsachse 13 einen sich vom Querabbildungsmaßstab unterscheidenden Längsabbildungsmaßstab auf. Im vorliegenden Beispiel ist die abbildende Linse 21 als Zylinderlinse 21 ausgeführt, die derart im Lichtstrahlenbündel 29 angeordnet ist, daß deren Planseite 31 parallel zur Glasplatte 17 und deren Längsachse 32 senkrecht zur messenden Kante 3 der Bahn 1 liegt. Diese Zylinderlinse 21 bildet das parallele Lichtstrahlenbündel 29 entlang ihrer Längsachse 32 im Längsabbildungsmaßstab eins zu eins ab, während sie das Lichtstrahlenbündel 29 entlang ihrer Querachse 33 fokusiert. In einem Abstand f21 zur Hauptebene der Zylinderlinse 21, welcher einer Brennweite f21 der Zylinderlinse 21 entspricht ist der CCD-Zeilensensor 2 angeordnet. Das parallel einfallende Lichtstrahlenbündel 29 wird von der Zylinderlinse 21 zu einem parallel zur Längsachse 32 verlaufenden Lichtstrich fokusiert. Eine Länge des Lichtstriches bei unbedeckter Einrichtung entspricht der Länge 128 der Blendenöffnung 28 und damit des Lichtstrahlenbündels 29.

Wird nun eine Kante 3 der Bahn 1 in den Bereich der Blendenöffnung 28 gebracht und weist die zu messende Kante 3 der Bahn 1 senkrecht zur Kante 3, im Bereich der Meßbreite b3 liegende Anomalien 4 auf, wird dadurch der Lichtstrich entsprechend verändert. Hierdurch entsteht ein beschriebenes, abgestuftes Videosignal 14, welches durch eine Elektronik ausgewertet wird.

### Teileliste

- 1: Bahn
- 2: CCD-Zeilensensor (photoelektrischer Empfänger)
- 3: Kante (1)
- 4: Anomalie (3)
- 5: -
- 6: Lichtstrahlenbündel
- 7: optisches System
- 8: Lichtquelle (IR - Lichtquelle)
- 9: optisches Bauelement
- 10: -
- 11: Abbildungsebene
- 12: Querachse
- 13: Längsachse
- 14: Videosignal
- 15: -
- 16: Beleuchtungseinrichtung
- 17: Glasplatte (Objektträger)
- 18: IR - Filter
- 19: Blende
- 20: -
- 21: Zylinderlinse (abbildende Linse)
- 22: Blende
- 23: Kondensor
- 24: Blendenöffnung (22)
- 25: -
- 26: Lichtstrahlen
- 27: Lichtstrahlenbündel, parallel, zylinderförmig
- 28: Blendenöffnung (19)
- 29: Lichtstrahlenbündel, rechteckig, parallel
- 30: -
- 31: Planseite (21)
- 32: Längsachse (21)
- 33: Querachse (21)

- A1: Amplitude, unbedeckt
- A2: Amplitude, mit Anomalie
- A3: Amplitude, bedeckt

- b3: Meßbreite
- b28: Breite der Blendenöffnung (28)

- f21: Brennweite der Zylinderlinse (21)
- f23: Brennweite des Kondensors (23)

- 12: Meßlänge
- 128: Länge der Blendenöffnung (28)

- la2: Länge des abgedeckten Bereiches
- lu2: Länge des unbedeckten Bereiches

## Patentansprüche

1. Verfahren zum Messen einer Lage einer Kante (3) von einer Bahn (1) oder einem Bogen mit einer lichtelektrischen Meßeinrichtung bestehend aus einer ein Lichtstrahlenbündel (6) erzeugenden Beleuchtungseinrichtung (16) und einem photoelektrischen Empfänger (2) mit einer Vielzahl von in geringem Abstand hintereinander angeordneten Photoelementen, wobei mittels eines optischen Systemes (7) die Anomalien aufweisende Kante (3) bzw. ein Schatten der Bahn (1) in einer Abbildungsebene (11) auf dem photoelektrischen Empfänger (2) abgebildet wird, wobei sich Längs- und Querabbildungsmaßstab des optischen Systemes (7) unterscheiden, dadurch gekennzeichnet, daß der Längsabbildungsmaßstab des optischen Systemes (7) parallel zur Kante (3) der Bahn (1) derart klein ist, daß das Lichtstrahlenbündel (6) in der Abbildungsebene (11) des photoelektrischen Empfängers (2) zu einer Linie fokusiert wird.

2. Vorrichtung zum Messen einer Lage einer Kante (3) von einer Bahn (1) oder einem Bogen mit einer lichtelektrischen Meßeinrichtung, bestehend aus einer gerichtete Lichtstrahlen aussendenden Beleuchtungseinrichtung (16), einem photoelektrischen Empfänger (2) mit einer Vielzahl von in geringem Abstand hintereinander angeordneten Photoelementen und einem optischen System (7) mit einer oder mehreren abbildenden Linsen (21), wobei als abbildende Linse (21) eine Zylinderlinse (21),; deren Längsachse (32) senkrecht zur zu messenden Kante (3) der Bahn (1) verläuft, vorgesehen ist, dadurch gekennzeichnet, daß die Kante (3) der Bahn (1) Anomalien aufweist, daß der photoelektrische Empfänger (2) in einem Abstand (f21) zur Hauptebene der Zylinderlinse (21) angeordnet ist und daß der Abstand (f21) der Brennweite (f21) der Zylinderlinse (21) entspricht.

3. Vorrichtung nach Anspruch 2, dadurch gekennzeichnet, daß vor der Zylinderlinse (21) eine Blende (19) mit einer Blendenöffnung (28) der Breite (b28) und Länge (128) angeordnet ist.

4. Vorrichtung nach Anspruch 2, dadurch gekennzeichnet, daß die Beleuchtungseinrichtung (16) eine IR-Lichtquelle (8) mit nachgeschalteter Blende (22) aufweist, so daß eine annähernd punktförmige Lichtquelle angeordnet ist.

## Revendications

1. Procédé de mesure d'une position d'un bord (3) d'une bande (1) ou d'une feuille, à l'aide d'un dispositif de mesure photoélectrique, constitué d'un dispositif d'illumination (16), générant un faisceau de rayons lumineux (6), et d'un récepteur photoélectrique avec une pluralité de photoéléments disposés les uns derrière les autres à faible distance, où, au moyen d'un système optique (7), l'arête (3), présentant des anomalies ou une ombre de la bande de papier (1), est illustrée dans un plan d'illustration (11) sur le récepteur photoélectrique (2), l'échelle de mesure de la représentation longitudinale et celle de la représentation transversale du système optique (7) étant différentes, caractérisé en ce que l'échelle de mesure de l'illustration longitudinale du système optique (7), parallèlement au bord (3) de la bande (1), est d'une petitesse faisant que le faisceau de rayons lumineux (6) est focalisé en donnant une ligne dans le plan d'illustration (11) du récepteur photoélectrique (2).

2. Dispositif de mesure d'une position d'un bord (3) d'une bande (1) ou d'une feuille, avec un dispositif de mesure photoélectrique, constitué d'un dispositif d'illumination (16) émettant des rayons lumineux orientés, d'un récepteur photoélectrique (2), comportant une pluralité de photoéléments disposés les uns derrière les autres à faible distance, et d'un système optique (7) avec une ou plusieurs lentilles de représentation (21), où à titre de lentilles de représéntation (21) est prévue une lentille cylindrique (21) dont l'axe longitudinal (32) s'étend perpendiculairement au bord (3) à mesurer de la bande (1), caractérisé en ce que le bord (3) de la bande (1) présente des anomalies, en ce que le récepteur photoélectrique (2) est disposé à une distance (f21) du bord principal de la lentille (21), et en ce que l'espacement (f21) correspond à la distance focale (f21) de la lentille cylindrique (21).

3. Dispositif selon la revendication 2, caractérisé en ce que, devant la lentille cylindrique (21), est disposé un diaphragme (19), dont l'ouverture de diaphragme (21) est d'une largeur (b28) et d'une longueur (128).

4. Dispositif selon la revendication 2, caractérisé en ce que le dispositif d'illumination (16) présente une source lumineuse IR (8) avec un diaphragme (22) installé en aval, de manière à produire une source lumineuse à peu près ponctuelle.

## Claims

1. Method of measuring a position of an edge (3) of a web (1) or a sheet, having an optoelectrical measuring apparatus comprising an illuminating apparatus (16) generating a bundle of light rays (6), and a photoelectric receiver (2) having a plurality of photoelements arranged one behind another at a short distance, the edge (3) having anomalies, or a shadow of the web (1), being imaged on the photoelectric receiver (2) in an image plane (11) by means of an optical system (7), the longitudinal and transverse imaging scale of the optical system (7) differing, characterized in that the longitudinal imaging scale of the optical system (7) parallel to the edge (3) of the web (1) is small, such that the bundle of light rays (6) is focussed to form a line in the image plane (11) of the photoelectric receiver (2).

2. Device for measuring a position of an edge (3) of a web (1) or a sheet, having an optoelectric measuring device, comprising an illuminating apparatus (16) emitting directed light rays, a photoelectric receiver (2) having a plurality of photoelements arranged one behind another at a small distance, and an optical system (7) having one or more imaging lenses (21), the imaging lens (21) provided being a cylindrical lens (21) whose longitudinal axis (32) runs at right angles to the edge (3) to be measured of the web (1), characterized in that the edge (3) of the web (1) has anomalies, in that the photoelectric receiver (2) is arranged at a distance (f21) from the principal plane of the cylindrical lens (21), and in that the distance (f21) corresponds to the focal length (f21) of the cylindrical lens (21).

3. Device according to Claim 2, characterized in that an aperture stop (19) with a stop aperture (28) with a width (b28) and a length (128) is arranged upstream of the cylindrical lens (21).

4. Device according to Claim 2, characterized in that the illuminating apparatus (16) has an IR light source (8) with an aperture stop (22) connected downstream, so that an approximately point-like light source is provided.
